# EUROPÄISCHE PATENTANMELDUNG

(11) **EP 2 607 024 A1**
(43) Veröffentlichungstag der Anmeldung: **26.06.2013**
(21) Anmeldenummer: 12191018.6
(22) Anmeldetag: 02.11.2012
(51) Int. Cl.: B25D 9/08, B25D 9/16, B25D 9/26, B25C 1/04, B23D 51/18

(54) **Pneumatische Werkzeugvorrichtung**

(30) Priorität: 19.12.2011 DE 102011088972
(71) Anmelder: Robert Bosch GmbH, 70442 Stuttgart (DE)
(72) Erfinder: Schlesak, Gerd, 71732 Tamm (DE); Schomburg, Helmut, 71229 Leonberg (DE); Dukart, Anton, 70839 Gerlingen (DE); Lennartz, Juergen, 73760 Ostfildern (DE); Fischer, Martin, 71229 Leonberg (DE); Kuespert, Klaus, 70771 Leinfelden-Echterdingen (DE)

(57) **Zusammenfassung**

Die Erfindung geht aus von einer pneumatischen Werkzeugvorrichtung, insbesondere für eine Handwerkzeugmaschine, mit zumindest einem bewegbar gelagerten Arbeitskörper (12a-c), der durch eine fremdgesteuerte Druckbeaufschlagung in einer Arbeitsrichtung (14a-c) beschleunigbar ist.

Es wird ein Druckventil (40a-c) vorgeschlagen, das dazu vorgesehen ist, zumindest einen Teil des Bewegungsablaufs des Arbeitskörpers (12a-c) zu steuern und/oder zu regeln.

## Beschreibung

### Stand der Technik

Es sind bereits pneumatische Werkzeugvorrichtungen, insbesondere für Handwerkzeugmaschinen, mit einem bewegbar gelagerten Arbeitskörper, der durch eine fremdgesteuerte Druckbeaufschlagung in einer Arbeitsrichtung beschleunigbar ist, bekannt.

### Offenbarung der Erfindung

Die Erfindung geht aus von einer pneumatischen Werkzeugvorrichtung, insbesondere für eine Handwerkzeugmaschine, mit zumindest einem bewegbar gelagerten Arbeitskörper, der durch eine fremdgesteuerte Druckbeaufschlagung in einer Arbeitsrichtung beschleunigbar ist.

Es wird ein Druckventil vorgeschlagen, das dazu vorgesehen ist, zumindest einen Teil des Bewegungsablaufs des Arbeitskörpers zu steuern und/oder zu regeln.

Unter einer "Werkzeugvorrichtung" soll in diesem Zusammenhang eine Vorrichtung insbesondere einer Handwerkzeugmaschine verstanden werden, die dazu vorgesehen ist, eine insbesondere zyklische Arbeitsbewegung und/oder einen Teil einer insbesondere zyklischen Arbeitsbewegung eines in einer Werkzeugaufnahme der Werkzeugvorrichtung angeordneten Werkzeugs zu erzeugen. Die zyklische Arbeitsbewegung weist bevorzugt eine Bewegung in einer Arbeitsrichtung sowie eine Rückholbewegung in einer Rückholrichtung auf. Die Arbeitsbewegung kann zum Beispiel eine Sägebewegung eines Sägeblatts, eine Eintreibbewegung eines Tackers, eine Pumpbewegung einer Pumpeinheit einer Spritzpistole, eine Schwingung eines Schleifblatts oder eine vergleichbare Bewegung sein. Insbesondere soll unter einer "Arbeitsbewegung" in diesem Zusammenhang jedoch eine schlagende Arbeitsbewegung verstanden werden, wie sie insbesondere zu einer Bearbeitung eines Werkstücks mit einem Bohr- und/oder Meißelwerkzeug erforderlich ist. Insbesondere bei einem Bohrwerkzeug kann neben der schlagenden Komponente der Arbeitsbewegung eine weitere, insbesondere rotierende Komponente der Arbeitsbewegung auf eine, dem Fachmann bekannte Art und Weise erzeugt werden. Unter einer "Handwerkzeugmaschine" soll insbesondere eine tragbare, insbesondere werkstückbearbeitende Maschine verstanden werden, wie insbesondere eine Bohrmaschine, ein Bohrhammer, ein Meißelhammer, ein Tacker, ein Schleifgerät, ein Winkelschleifer, eine Säge, wie eine Pendel- oder Stichsäge, ein Hobel, ein Schrauber, eine Fräse, ein Gartengerät und/oder ein Multifunktionswerkzeug. Unter "tragbar" soll in diesem Zusammenhang insbesondere verstanden werden, dass ein Benutzer die Maschine bei einer Benutzung mit einer Hand oder beiden Händen führt. Bevorzugt ist die Handwerkzeugmaschine als elektrisch betriebene Handwerkzeugmaschine ausgebildet. Es sind aber auch andere Werkzeugmaschinen denkbar, insbesondere pneumatisch angetriebene tragbare Werkzeugmaschinen, wie pneumatische Bohr- und/oder Schlaghämmer. Ebenfalls kann es einem Fachmann als sinnvoll erscheinen, die erfindungsgemäße Werkzeugvorrichtung bei einer stationären Werkzeugmaschine einzusetzen. Unter einem bewegbar gelagerten "Arbeitskörper" soll in diesem Zusammenhang insbesondere ein Bauteil verstanden werden, welches zumindest einen Teil der insbesondere zyklischen Arbeitsbewegung erzeugt. Bevorzugt wird die mögliche Bewegung des Arbeitskörpers von zwei Endpositionen begrenzt. Bevorzugt wird der Arbeitskörper zyklisch mit einer Frequenz zwischen 1 und 200 Hz, besonders bevorzugt mit einer Frequenz zwischen 10 und 80 Hz zyklisch hin- und herbewegt. Ein Bewegungszyklus des Arbeitskörpers bestehend aus einer Hin- und Herbewegung dauert bevorzugt zwischen 5 ms und 1 s, besonders bevorzugt zwischen 12,5 ms und 88 ms. Der Arbeitskörper kann zum Beispiel ein Kolben sein, der eine Sägebewegung erzeugt. Insbesondere kann der Arbeitskörper ein Schläger einer Schlagwerkvorrichtung sein, der eine schlagende Arbeitsbewegung direkt oder indirekt auf das Werkzeug und/oder die Werkzeugaufnahme überträgt. Unter einer "Arbeitsrichtung" soll in diesem Zusammenhang insbesondere die Bewegungsrichtung des Arbeitskörpers verstanden werden, die im Wesentlichen dazu vorgesehen ist, eine wirksame Arbeitsbewegung zu erzeugen. Eine wirksame Arbeitsbewegung kann zum Beispiel dadurch erzeugt werden, dass der Arbeitskörper einen Schlagimpuls auf das Werkzeug überträgt. Bei einem Sägeblatt kann die wirksame Arbeitsbewegung diejenige Bewegungsrichtung sein, bei der eine Sägeverzahnung den größten Materialabtrag an einem Werkstück bewirkt. Unter einer "fremdgesteuerten" Druckbeaufschlagung soll in diesem Zusammenhang insbesondere verstanden werden, dass die Druckbeaufschlagung durch eine von der Arbeitskörperbewegung zumindest teilweise unabhängige Einheit gesteuert wird. Unter einer Steuerung und/oder Regelung eines "Bewegungsablaufs" soll in diesem Zusammenhang insbesondere verstanden werden, dass das Druckventil ein Beschleunigungsprofil, das heißt die Höhe einer Beschleunigung des Arbeitskörpers während der Bewegung des Arbeitskörpers, zumindest während eines Teils des Bewegungsablaufs steuernd und/oder regelnd variiert. Insbesondere kann das Druckventil dazu vorgesehen sein, Beschleunigungsspitzen des Arbeitskörpers zu vermeiden, indem es die Druckbeaufschlagung zumindest während Teilen des Bewegungsablaufs begrenzt. Bevorzugt kann das Druckventil dazu vorgesehen sein, zumindest während Teilen des Bewegungsablaufs des Arbeitskörpers die Druckbeaufschlagung zumindest aufrechtzuerhalten, um eine andauernde Beschleunigung zu erreichen. Es kann eine besonders effiziente Beschleunigung des Arbeitskörpers erreicht werden. Insbesondere kann der Arbeitskörper bei einer Beschleunigung in eine die Arbeitsbewegung erzeugende Richtung eine besonders wirksame Arbeitsbewegung erzeugen. Eine besonders wirksame Arbeitsbewegung kann beispielsweise bei einer Schlagwerkvorrichtung erreicht werden, indem der Arbeitskörper mit einer besonders hohen Geschwindigkeit auf das Werkzeug oder den Schlagbolzen auftrifft. Bevorzugt kann das Beschleunigungsprofil so geformt werden, dass der Arbeitskörper mit einer möglichst geringen Beschleunigung auf eine für eine Schlagstärke notwendige Geschwindigkeit beschleunigt wird. Es können Vibrationen an einem Gehäuse und/oder Griff der Handwerkzeugmaschine vermieden oder verringert werden. Ein Bedienkomfort kann erhöht werden. Zum Beispiel kann bei einer Schlagwerkvorrichtung eine für eine Schlagstärke notwendige Geschwindigkeit, mit der der Arbeitskörper auf einen Schlagbolzen oder ein Werkzeug auftrifft, mit einer besonders geringen Beschleunigung des Arbeitskörpers erreicht werden.

Es wird eine Steuer- und/oder Regeleinheit vorgeschlagen, die dazu vorgesehen ist, das Druckventil zu steuern und/oder zu regeln. Unter einer "Steuer- und/oder Regeleinheit" soll in diesem Zusammenhang insbesondere eine Einheit verstanden werden, die zumindest eine Stellgröße ausgibt. Die Stellgröße kann insbesondere dazu vorgesehen sein, zumindest eine Ventilöffnung des Druckventils einzustellen. Die Steuer- und/oder Regeleinheit kann bevorzugt über zumindest eine Messeinrichtung verfügen, die zumindest ein Eingangssignal bereitstellt, das die Stellgröße beeinflusst. Eingangssignale können bevorzugt eine Position und/oder Geschwindigkeit und/oder Beschleunigung des Arbeitskörpers sein, eine aktuelle Temperatur und/oder ein aktueller Luftdruck und eine Benutzereingabe, wie eine Schalterstellung eines Betätigungsschalters, und/oder eine Eingabe mit Hilfe einer Eingabeeinheit. Es sind weitere, dem Fachmann für eine Steuerung und/oder Reglung des Beschleunigungsprofils des Arbeitskörpers sinnvolle Eingangssignale denkbar. Die Steuer- und/oder Regeleinheit ist bevorzugt als elektrische und/oder elektronische Steuer- und/oder Regeleinheit ausgebildet. Es sind auch andere Ausbildungen denkbar, wie mechanische und/oder pneumatische Ausbildungen der Steuer- und/oder Regeleinheit. Bevorzugt verfügt die Steuer- und/oder Regeleinheit über eine Speichereinheit und/oder eine Recheneinheit. In der Speichereinheit können Steuer- und/oder Regelparameter abgespeichert sein. Das Druckventil kann besonders wirksam gesteuert und/oder geregelt werden. Es kann ein besonders vorteilhaftes Beschleunigungsprofil des Arbeitskörpers erzielt werden. Benutzereingaben, Betriebsmodi und/oder Umwelteinflüsse, wie Temperatur und/oder Luftdruck, können besonders wirkungsvoll berücksichtigt werden. Es kann ein besonders vibrationsarmer Betrieb der Werkzeugvorrichtung erreicht werden, wenn Beschleunigungsspitzen vermieden werden. Ein Komfort für den Benutzer kann erhöht werden. Die Effizienz der Werkzeugvorrichtung kann weiter erhöht werden.

Es wird ein Schaltventil vorgeschlagen, dass von einem Durchgangsventil gebildet wird. Unter einem "Schaltventil" soll in diesem Zusammenhang insbesondere ein Ventil verstanden werden, das dazu vorgesehen ist, abhängig von einer Schaltstellung zumindest eine Druckverbindung zu öffnen oder zu schließen. Das Schaltventil kann insbesondere dazu vorgesehen sein, die Druckbeaufschlagung des Arbeitskörpers zu schalten. Bevorzugt ist das Schaltventil strömungstechnisch zwischen einer Druckquelle, dem Druckventil und dem Arbeitskörper angeordnet. Das Schaltventil kann durch den bewegbar gelagerten Arbeitskörper gesteuert werden, insbesondere kann der Arbeitskörper das Schaltventil umschalten, wenn er seine Endpositionen erreicht oder in die Nähe der Endpositionen gelangt. Bevorzugt wird das Schaltventil durch eine Fremdsteuereinheit gesteuert oder geregelt. Die Fremdsteuereinheit kann zur Steuerung des Schaltventils die Position des Arbeitskörpers auswerten, sowie weitere Parameter berücksichtigen, wie eine Geschwindigkeit des Arbeitskörpers, einen Umgebungsluftdruck und/oder eine gewünschte Geschwindigkeit und/oder Frequenz und/oder einen gewünschten Impuls der Arbeitskörperbewegung. Besonders bevorzugt wird das Schaltventil von der Steuer- und/oder Regeleinheit des Druckventils gesteuert oder geregelt und/oder ist die Fremdsteuereinheit Bestandteil der Steuer- und/oder Regeleinheit. Das Schaltventil und das Druckventil können bevorzugt durch ein Ventil mit variabler Öffnung gebildet werden. Unter einem "Durchgangsventil" soll in diesem Zusammenhang insbesondere ein Ventil verstanden werden, das dazu vorgesehen ist, einen Ventildurchgang zu öffnen oder zu schließen. Insbesondere kann das Durchgangsventil kurze Schaltzeiten aufweisen. Bevorzugt beträgt eine Schaltzeit des Durchgangsventils weniger als 10 ms, besonders bevorzugt weniger als 5 ms. Dem Fachmann sind schnell schaltende Durchgangsventile zum Beispiel als CNG-Einblasventile aus dem Motorenbau (Erdgasmotoren) bekannt. Es kann ein besonders einfacher und kostengünstiger Aufbau des Schaltventils erreicht werden. Es können besonders schnelle Schaltzeiten erreicht werden. Das Schaltventil kann als Druckventil eingesetzt werden.

Weiter wird ein Federelement vorgeschlagen, welches dazu vorgesehen ist, in zumindest einem Betriebszustand auf den Arbeitskörper eine Kraft in der Rückholrichtung auszuüben. Unter einem "Federelement" soll in diesem Zusammenhang insbesondere ein Element verstanden werden, welches dazu vorgesehen ist bei einer Auslenkung eine Rückstellkraft zu erzeugen, wie insbesondere eine Schraubenfeder. Die maximale Auslenkung des Federelements kann insbesondere zumindest 1/4 der Rückholbewegung betragen, bevorzugt wenigstens die Hälfte, besonders bevorzugt mehr als 2/3 der Rückholbewegung. Die Rückholbewegung kann besonders schnell erfolgen. Insbesondere kann die Rückholbewegung zumindest weitgehend unabhängig von Umwelteinflüssen wie Luftdruck oder Temperatur sein. Der Arbeitskörper kann besonders schnell in einer Rückholbewegung in eine Ausgangsposition zurückkehren. Die Zeitdauer, die für die Beschleunigung in einer Vorwärtsbewegung in Richtung des Schlagbolzens zur Verfügung steht, kann erhöht werden. Eine für eine gewünschte Schlagstärke notwendige Beschleunigung in Arbeitsrichtung kann besonders niedrig sein. Insbesondere kann mehr als die Hälfte der Zeit des Bewegungszyklus für die Vorwärtsbewegung zur Verfügung stehen. Bevorzugt kann der Arbeitskörper vor Erreichen der in Rückholrichtung liegenden Endposition durch eine Druckbeaufschlagung abgebremst werden. Ein Aufprall des Arbeitskörpers auf weitere Teile der Werkzeugvorrichtung und/oder hohe Beschleunigungen am Ende der Rückholbewegung kann vermieden oder abgeschwächt werden. Es kann ein besonders vibrationsarmer Betrieb der Werkzeugvorrichtung erreicht werden, wenn Beschleunigungsspitzen vermieden werden. Ein Komfort für den Benutzer kann erhöht werden. Die Effizienz der Werkzeugvorrichtung kann erhöht werden.

Weiter wird zumindest eine Entspannungsöffnung vorgeschlagen, die dazu vorgesehen ist, eine Druckbeaufschlagung des Arbeitskörpers abhängig von einer Position des Arbeitskörpers zu entspannen. Insbesondere kann die Entspannungsöffnung dazu vorgesehen sein, die Druckbeaufschlagung zu entspannen, wenn der Arbeitskörper seine in Arbeitsrichtung liegende Endposition erreicht und/oder sich in der Nähe der in Arbeitsrichtung liegenden Endposition befindet. Unter "in der Nähe" soll dabei insbesondere eine Distanz verstanden werden, die weniger als 1/3, bevorzugt weniger als 1/4, besonders bevorzugt weniger als 1/10 der maximalen Arbeitskörperbewegung zwischen seinen Endpositionen entspricht. Die Entspannung der Druckbeaufschlagung kann unabhängig vom Schaltventil und/oder der Steuer- und/oder Regeleinheit erfolgen. Das Schaltventil und/oder die Steuer- und/oder Regeleinheit kann besonders einfach aufgebaut sein.

In einer bevorzugten Ausbildung der Erfindung wird zumindest ein Hochdruckspeicher zur Bereitstellung von Hochdruck und/oder zumindest ein Niederdruckspeicher zur Aufnahme von entspanntem Medium vorgeschlagen. Unter einem "Hochdruckspeicher" soll in diesem Zusammenhang insbesondere ein Speicher verstanden werden, der von einem Kompressor mit komprimiertem Druckmedium, das zu einer Druckbeaufschlagung des Arbeitskörpers vorgesehen ist, gefüllt wird. Durch den Hochdruckspeicher kann ein Druckabfall verringert werden, wenn kurzfristig mehr Druckmedium zur Druckbeaufschlagung verbraucht wird als der Kompressor liefern kann. Bevorzugt beträgt bei einer Beschleunigung des Arbeitskörpers ein Hochdruckabfall gegenüber einem Solldruck im Betrieb der Werkzeugvorrichtung maximal 50%, besonders bevorzugt weniger als 30%. Unter einem "Niederdruckspeicher" soll in diesem Zusammenhang insbesondere ein Speicher verstanden werden, der Druckmedium aufnimmt nachdem es zur Druckbeaufschlagung des Arbeitskörpers genutzt wurde. Bevorzugt weist der Niederdruckspeicher einen Druck auf, der zumindest in einem Betriebszustand höher ist als ein Luftdruck der die Werkzeugvorrichtung umgebenden Luft. Besonders bevorzugt weist die Werkzeugvorrichtung einen Hochdruckspeicher und einen Niederdruckspeicher auf. Bevorzugt entnimmt der Kompressor über dem Niederdruckspeicher Druckmedium zur Verdichtung und führt dieses dem Hochdruckspeicher zu. Der Kompressor kann zusätzlich Druckmedium aus einer weiteren Quelle zuführen, insbesondere zum Ausgleich von Leckverlusten und/oder zu Betriebsbeginn. Insbesondere kann der Kompressor zu diesem Zweck Umgebungsluft nutzen. Der Druck des Hochdruckspeichers kann aus dem Druck des Niederdruckspeichers verglichen mit einer Erzeugung ausgehend vom Druckniveau des Luftdrucks mit einem geringeren Energieeinsatz erreicht werden. Das Druckmedium kann in einem geschlossenen Kreislauf geführt werden. Eine Verschmutzung der Werkzeugvorrichtung durch Zuführen von Fremdluft kann vermieden oder verringert werden. Es können weitere Ventile vorgesehen sein, um die Entnahme und Weitergabe von Druck aus der Umgebung und/oder dem Niederdruckspeicher und/oder dem Hochdruckspeicher zu steuern. Es kann ein Ventil dazu vorgesehen sein, eine Verbindung zwischen dem Hochdruckspeicher und dem Schaltventil der Werkzeugvorrichtung zu öffnen oder zu verschließen. Es kann ein Ventil dazu vorgesehen sein, eine Verbindung zwischen dem Niederdruckspeicher und dem Schaltventil zu öffnen oder zu verschließen. Es kann ein Ventil dazu vorgesehen sein, eine Verbindung zwischen dem Kompressor und einer Ansaugeinrichtung für Umgebungsluft zu öffnen oder zu verschließen. Es kann ein Ventil dazu vorgesehen sein, eine Verbindung zwischen dem Kompressor und dem Niederdruckspeicher zu öffnen oder zu verschließen. Es kann ein effizientes Anlaufen der Werkzeugvorrichtung erreicht werden. Eine Verbindung zwischen Hochdruckspeicher und Schaltventil kann unterbrochen werden, während der Kompressor den Hochdruckspeicher auf ein vorgegebenes Druckniveau befüllt. Der Hochdruckspeicher kann besonders schnell befüllt werden. Ein unkontrollierter Betrieb der Werkzeugvorrichtung mit unzureichendem Druck kann vermieden werden. Eine Verbindung zwischen dem Schaltventil und dem Niederdruckspeicher kann unterbrochen werden, während der Kompressor Umgebungsluft ansaugt. Eine Entnahme von Luft aus der Werkzeugvorrichtung kann vermieden werden. Umgebungsluft kann besonders effizient angesaugt werden und die Werkzeugvorrichtung mit Luft gefüllt werden. Eine Verbindung zwischen dem Niederdruckspeicher und dem Kompressor kann unterbrochen werden, während der Kompressor Umgebungsluft ansaugt. Eine Entnahme von Luft aus dem Niederdruckspeicher kann vermieden werden, während die Werkzeugvorrichtung mit Luft befüllt wird. Es kann im Betrieb der Werkzeugvorrichtung zwischen einer Luftzufuhr aus dem Niederdruckspeicher und der Umgebung umgeschaltet werden. Ein Luftverlust durch Leckagen kann im Betrieb der Werkzeugvorrichtung ausgeglichen werden.

Weiter wird eine am Hochdruckspeicher angeordnete Kompressoreinheit vorgeschlagen. Unter einer "Kompressoreinheit" soll in diesem Zusammenhang insbesondere eine bevorzugt elektrisch angetriebene Pumpeinheit verstanden werden, die dazu vorgesehen ist, ein kompressibles Druckmedium zu verdichten. Bevorzugt ist die Kompressoreinheit mit dem Niederdruckspeicher und dem Hochdruckspeicher verbunden. Besonders bevorzugt ist die Kompressoreinheit innerhalb der Handwerkzeugmaschine angeordnet. Eine Handwerkzeugmaschine mit einer Werkzeugvorrichtung mit am Hochdruckspeicher angeordneter Kompressoreinheit kann besonders kompakt sein. Auf weitere, externe Aggregate kann verzichtet werden.

Besonders bevorzugt ist die Werkzeugvorrichtung als Schlagwerkvorrichtung und der Arbeitskörper als Schläger ausgebildet. Der Schläger kann eine schlagende Arbeitsbewegung direkt oder indirekt auf das Werkzeug und/oder die Werkzeugaufnahme übertragen. Die Werkzeugvorrichtung kann bevorzugt in einem Bohr- und/oder Meißelhammer eingesetzt werden. Die Bewegung des Schlägers kann besonders effizient gesteuert und/oder geregelt werden. Ein Betrieb kann besonders vibrationsarm sein. Die Schlagwerkvorrichtung kann besonders wirksam sein. Insbesondere kann die Schlagwerkvorrichtung besonders zuverlässig sein.

Weiter wird eine Handwerkzeugmaschine mit einer erfindungsgemäßen Werkzeugvorrichtung vorgeschlagen. Die Handwerkzeugmaschine kann besonders effizient und vibrationsarm sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Bohrhammers mit einer erfindungsgemäßen Werkzeugvorrichtung,
- Fig. 2: eine schematische Darstellung der Werkzeugvorrichtung mit einem Arbeitskörper in einer hinteren Endposition,
- Fig. 3: eine schematische Darstellung der Werkzeugvorrichtung mit dem Arbeitskörper in einer vorderen Endposition,
- Fig. 4: eine schematische Darstellung einer Werkzeugvorrichtung mit einem Arbeitskörper in einer hinteren Endposition in einem zweiten Ausführungsbeispiel,
- Fig. 5: eine schematische Darstellung der Werkzeugvorrichtung des zweiten Ausführungsbeispiels mit dem Arbeitskörper in einer vorderen Endposition,
- Fig. 6: eine schematische Darstellung einer Werkzeugvorrichtung mit einem Arbeitskörper in einer hinteren Endposition in einem dritten Ausführungsbeispiel und
- Fig. 7: eine schematische Darstellung der Werkzeugvorrichtung des dritten Ausführungsbeispiels mit dem Arbeitskörper in einer vorderen Endposition.

### Beschreibung der Ausführungsbeispiele

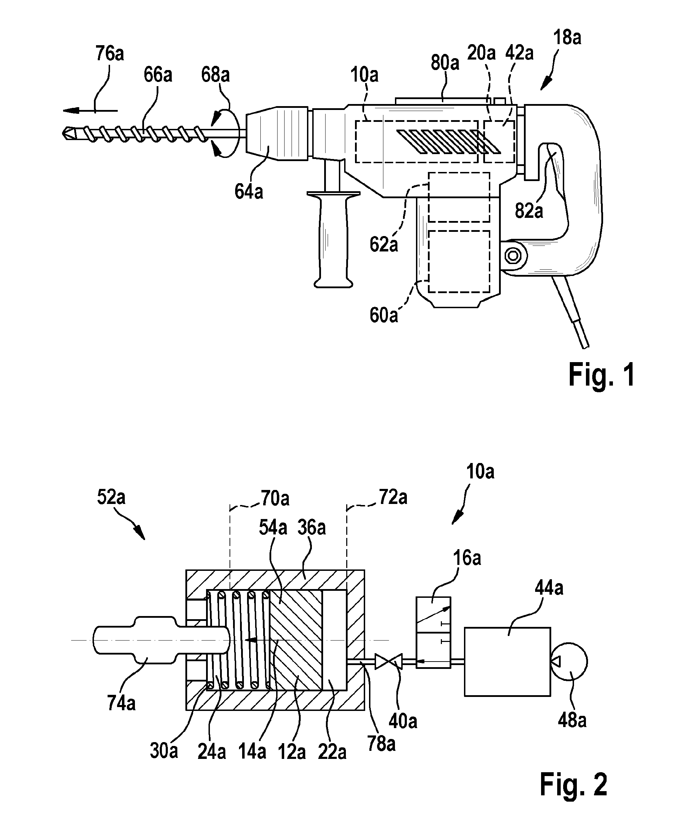

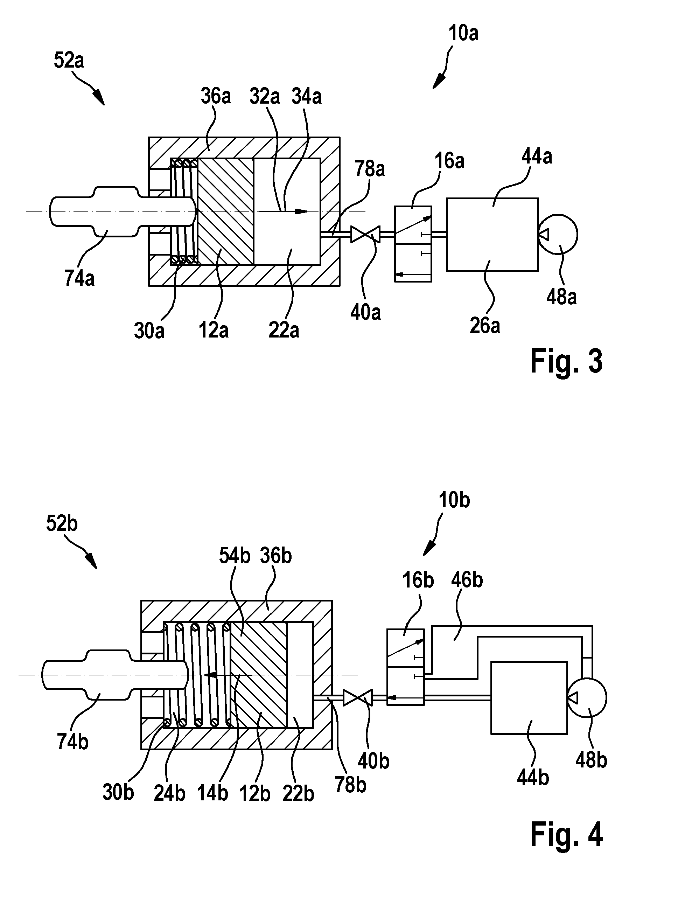

Figur 1 zeigt eine Handwerkzeugmaschine 18a, die als Bohrhammer ausgebildet ist, mit einer erfindungsgemäßen pneumatischen Werkzeugvorrichtung 10a. Die Handwerkzeugmaschine 18a weist einen elektrischen Motor 60a auf, der in zumindest einem Betriebszustand über eine Getriebeeinheit 62a in einer, dem Fachmann bekannten Art ein in einem Werkzeughalter 64a eingespanntes Werkzeug 66a in einer rotierenden Arbeitsbewegung 68a antreibt. Die Werkzeugvorrichtung 10a weist einen bewegbar gelagerten Arbeitskörper 12a auf, der durch eine fremdgesteuerte Druckbeaufschlagung in einer Arbeitsrichtung 14a beschleunigbar ist (Figur 2). Der Arbeitskörper 12a wird zwischen zwei Endpositionen 70a und 72a hin und her bewegt. Eine Kompressoreinheit 48a komprimiert Luft und befüllt eine Druckquelle 26a zur Bereitstellung eines Drucks zur Druckbeaufschlagung mit Druckluft als Druckmedium. Die Kompressoreinheit 48a wird durch den Motor 60a angetrieben. Es ist aber auch denkbar, dass die Kompressoreinheit 48a über einen eigenen Antriebsmotor verfügt oder dass der Handwerkzeugmaschine 18a Druckluft extern zugeführt wird. Ein Druckventil 40a ist dazu vorgesehen, zumindest einen Teil des Bewegungsablaufs des Arbeitskörpers 12a zu steuern und/oder zu regeln. Eine elektrische Steuer- und/oder Regeleinheit 42a ist dazu vorgesehen, das Druckventil 40a zu steuern und/oder zu regeln und ist über nicht näher dargestellte Steuerleitungen mit dem Druckventil 40a verbunden. Die Druckquelle 26a wird durch einen Hochdruckspeicher 44a gebildet, der durch die Kompressoreinheit 48a mit Hochdruck gefüllt wird. Die Kompressoreinheit 48a ist am Hochdruckspeicher 44a angeordnet. Der Arbeitskörper 12a ist als Schläger 54a der als Schlagwerkvorrichtung 52a ausgebildeten Werkzeugvorrichtung 10a ausgebildet. Der Arbeitskörper 12a ist in einem Führungsrohr 36a gelagert. Im Bereich der Endposition 70a ist ein Schlagbolzen 74a angeordnet. Trifft der Arbeitskörper 12a auf den Schlagbolzen 74a auf, überträgt er über den Schlagbolzen 74a einen Schlagimpuls auf das Werkzeug 66a. Das Werkzeug 66a übt eine schlagende Arbeitsbewegung 76a in der Arbeitsrichtung 14a aus. Ein Raum 22a im Führungsrohr 36a zwischen Arbeitskörper 12a und der Endposition 72a ist bis auf eine Öffnung 78a abgeschlossen. Die Öffnung 78a ist mit dem Druckventil 40a verbunden. Durch die Öffnung 78a wird der Arbeitskörper 12a mit Druck beaufschlagt. Bei einer Bewegung in einer Rückholrichtung 34a kann durch die Öffnung 78a Druck entweichen. Ein Federelement 30a wird bei einer Bewegung des Arbeitskörpers 12a in Arbeitsrichtung 14a gespannt und übt auf den Arbeitskörper 12a eine Kraft 32a in Rückholrichtung 34a aus. Ein Raum 24a auf der der Endposition 70a zugewandten Seite des Arbeitskörpers 12a ist mit der Umgebungsluft verbunden, so dass dieser Raum im Wesentlichen mit Umgebungsluftdruck beaufschlagt ist. Ist der Druck im Raum 22a geringer als der Umgebungsluftdruck, beschleunigt das Federelement 30a den Arbeitskörper 12a in Rückholrichtung 34a. Ein Schaltventil 16a, das zwischen dem Druckventil 40a und dem Hochdruckspeicher 44a angeordnet ist, verbindet abhängig von einer Schaltstellung den Raum 22a über das Druckventil 40a mit dem Hochdruckspeicher 44a (Figur 2) oder der Umgebung der Werkzeugvorrichtung 10a (Figur 3). Das Schaltventil 16a wird von einer Fremdsteuereinheit 20a, die Bestandteil der Steuer- und/oder Regeleinheit 42a ist, angesteuert.

Die Steuer- und/oder Regeleinheit 42a verfügt über nicht näher dargestellte Sensoren zur Erfassung der Position und der Geschwindigkeit des Arbeitskörpers 12a, des aktuellen Drucks der Druckquelle 26a sowie des Luftdrucks. Weiter kann ein Benutzer über eine Bedieneinheit 80a weitere Parameter vorgeben, wie eine Schlagfrequenz und eine Schlagstärke und einen Betriebsmodus. Die Parameter können absolut vorgegeben werden oder relativ zur Stellung eines Bedienschalters 82a definiert sein. So kann in einem Meißelbetrieb die Schlagfrequenz und/oder die Schlagstärke durch Drücken des Bedienschalters 82a variiert werden. In einem Schlagbohrbetrieb kann durch Drücken des Bedienschalters 82a eine Drehzahl des Werkzeugs 66a vom Benutzer variiert werden, während abhängig vom gewählten Betriebsmodus Schlagfrequenz und/oder Schlagstärke konstant bleiben können oder ebenfalls abhängig von der Stellung des Bedienschalters 82a variiert werden. In einem gesteuerten Betrieb erfolgt die Druckbeaufschlagung anhand in der Steuer- und/oder Regeleinheit 42a festgelegter Parameter, die entsprechend der vom Benutzer eingegebenen Parameter modifiziert werden. Abhängig von einem gemessenen Luftdruck wird die Druckbeaufschlagung um einen Einfluss des Luftdrucks korrigiert. Schwankt der bereitgestellte Druck der Druckquelle 26a, kann dies ebenfalls durch Steuerung des Druckventils 40a berücksichtigt werden. In einem Regelbetrieb wird über die nicht näher dargestellten Sensoren die Geschwindigkeit und die aktuelle Position des Arbeitskörpers 12a erfasst und die Druckbeaufschlagung erfolgt so, dass die Beschleunigung und/oder Geschwindigkeit des Arbeitskörpers 12a in der Steuer- und/ oder Regeleinheit 42a hinterlegten oder vom Benutzer eingegebenen Sollwerten entspricht.

Während eines Bewegungszyklus wird der Raum 22a im Führungsrohr 36a auf der vom Schlagbolzen 74a abgewandten Seite des Arbeitskörpers 12a durch das Schaltventil 16a mit dem Hochdruckspeicher 44a verbunden, das Druckventil 14a wird geöffnet und die Steuer- und/oder Regeleinheit 42a steuert und/oder regelt über das Druckventil 14a den Bewegungsablauf des Arbeitskörpers 12a. Der Bewegungsablauf ist so gestaltet, dass die gewünschte Aufprallgeschwindigkeit des Arbeitskörpers 12a mit einer möglichst geringen Beschleunigung erzielt wird und so Vibrationen vermindert werden. Der Arbeitskörper 12a wird in Richtung des Schlagbolzens 74a beschleunigt und trifft auf den Schlagbolzen 74a auf. Das Schaltventil 16a wird umgeschaltet, so dass der Raum 22a mit der Umgebung der Werkzeugvorrichtung 10a verbunden ist und der Druck aus dem Raum 22a entweichen kann. Durch die Kraft 32a des Federelements 30a wird der Arbeitskörper 12a nun in Rückholrichtung 34a beschleunigt. Durch das Druckventil 14a kann eingestellt werden, wie schnell der Druck aus dem Raum 22a entweichen kann. Ein Bewegungsablauf der Rückholbewegung 34a kann so beeinflusst werden. Der Bewegungsablauf ist so gestaltet, dass die Rückholbewegung in möglichst kurzer Zeit erfolgt, insbesondere in weniger als der Hälfte der Zeit eines Bewegungszyklus. Dazu wird das Druckventil 40a zunächst weit geöffnet. Die Kraft 32a des Federelements 34a kann den Arbeitskörper 12a auf eine hohe Geschwindigkeit beschleunigen. Kurz vor Erreichen der Endposition 72a wird das Druckventil 40a geschlossen, so dass aus dem Raum 22a keine Luft mehr entweichen kann und der Druck im Raum 22a zu steigen beginnt. Durch diesen Gegendruck wird der Arbeitskörper 12a vor einem Aufprall an der Endposition 72a abgebremst. Ein Aufprall des Arbeitskörpers 12a an der hinteren Endposition 72a und unerwünschte Vibrationen werden vermieden. Das Schaltventil 16a verbindet den Raum 22a wieder mit dem Hochdruckspeicher 44a, so dass ein nächster Bewegungszyklus beginnen kann. Um den Arbeitskörper 12a besonders wirksam abzubremsen, kann der Raum 22a auch bereits mit dem Hochdruckspeicher 44a verbunden werden, bevor der Arbeitskörper 12a die Endposition 72a erreicht.

Die nachfolgende Beschreibung und die Zeichnung weiterer Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels verwiesen werden kann. Zur Unterscheidung der Ausführungsbeispiele ist anstelle des Buchstabens a des ersten Ausführungsbeispiels der Buchstabe b und c den Bezugszeichen der weiteren Ausführungsbeispiele nachgestellt.

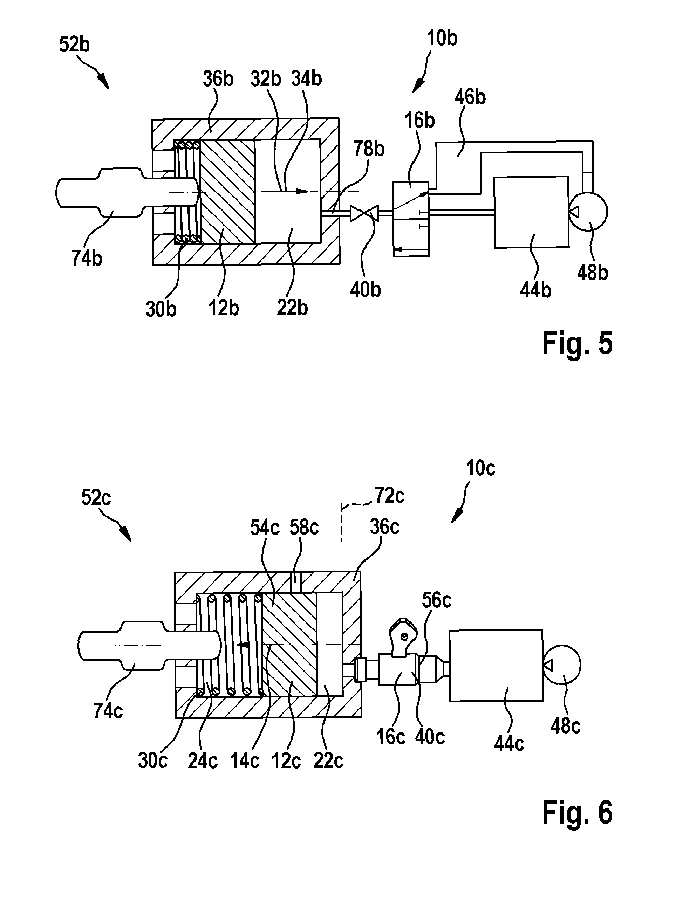

Figur 4 und 5 zeigen ein weiteres Ausführungsbeispiel einer erfindungsgemäßen, als Schlagwerkvorrichtung 54b ausgebildeten pneumatischen Werkzeugvorrichtung 10b mit einem als Schläger 54b ausgebildeten Arbeitskörper 12b. Die Werkzeugvorrichtung 10b unterscheidet sich vom ersten Ausführungsbeispiel insbesondere durch einen Niederdruckspeicher 46b zur Aufnahme von entspanntem Medium, in diesem Fall Luft. Ein Schaltventil 16b verbindet einen Raum 22b abhängig von einer Schaltstellung mit einem Hochdruckspeicher 44b und dem Niederdruckspeicher 46b. Druck entweicht nicht wie im vorangegangenen Ausführungsbeispiel in die Umgebung der Werkzeugvorrichtung 10b, sondern in den Niederdruckspeicher 46b. Eine Kompressoreinheit 48b entnimmt dem Niederdruckspeicher 46b Luft, komprimiert diese und befüllt den Hochdruckspeicher 44b mit Hochdruck. Es entsteht ein geschlossener Druckkreislauf. Die Kompressoreinheit 48b verfügt über ein weiteres, nicht näher dargestelltes Ventil zum Ansaugen von Luft aus der Umgebung, um bei einer Inbetriebnahme den Hochdruckspeicher 44b zu befüllen und Leckverluste auszugleichen. Insbesondere wenn der Druck im Niederdruckspeicher 46b geringer ist als ein die Werkzeugvorrichtung 10b umgebender Luftdruck, kann durch die Kompressoreinheit 48b die Luftmenge im Druckkreislauf erhöht werden.

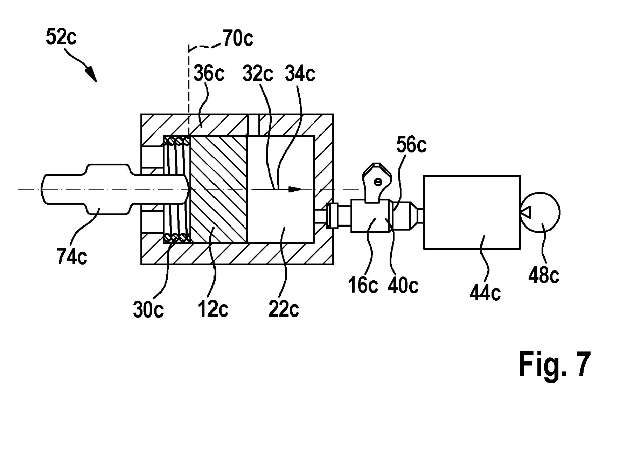

Figur 6 und Figur 7 zeigen eine als Schlagwerkvorrichtung 52c ausgebildete pneumatische Werkzeugvorrichtung 10c in einem dritten Ausführungsbeispiel. Die Werkzeugvorrichtung 10c unterscheidet sich von der Werkzeugvorrichtung des ersten Ausführungsbeispiels insbesondere dadurch, dass ein Schaltventil 16c von einem Durchgangsventil 56c gebildet wird. Das Schaltventil 16c kann durch eine Steuer- und/oder Regeleinheit 42c unterschiedlich weit geöffnet und geschlossen werden, so dass es zugleich ein Druckventil 40c bildet, dass dazu geeignet ist, zumindest einen Teil des Bewegungsablaufs eines als Schläger 54c ausgebildeten Arbeitskörpers 12c zu steuern und/oder zu regeln.

Eine Entspannungsöffnung 58c wird vom Arbeitskörper 12c überdeckt, wenn er sich in der Nähe einer hinteren Endposition 72c befindet (Figur 6). Wird das Schaltventil 16c geöffnet, findet eine Druckbeaufschlagung des Arbeitskörpers 12c statt, so dass dieser mit einer Bewegung in Arbeitsrichtung 14c in Richtung eines Schlagbolzens 74c beschleunigt wird. Befindet sich der Arbeitskörper 12c im Bereich einer vorderen Endposition 70c, gibt der Arbeitskörper 12c die Entspannungsöffnung 58c frei (Figur 7), so dass die eine Druckbeaufschlagung des Arbeitskörpers 12c entspannt wird. Druck, der sich in einem der hinteren Endposition 72c zugewandten Raum 22c zwischen dem Arbeitskörper 12c und einem den Arbeitskörper 12c lagernden Führungsrohr 36c befindet, kann in die Umgebung der Werkzeugvorrichtung 10c entweichen. Der Arbeitskörper 12c wird nun durch eine Kraft 32c in einer Rückholrichtung 34c beschleunigt. Die Kraft 32c ist so gewählt, dass der Arbeitskörper, bevor er sich in Rückholrichtung 34c zu bewegen beginnt, einen Schlagimpuls auf den Schlagbolzen 74c ausübt. Das Schaltventil 16c wird verschlossen, so dass kein weiterer Hochdruck aus dem Hochdruckspeicher 44c in den Raum 22c einströmt. Nähert sich der Arbeitskörper 12c der hinteren Endposition 72c überdeckt er die Entspannungsöffnung 58c und wird durch das resultierende Druckpolster abgebremst. Ein Aufprall des Arbeitskörpers 12c im Bereich der hinteren Endposition 72c kann so vermieden oder abgeschwächt werden. Wird das Schaltventil 16c wieder geöffnet, kann der Arbeitskörper erneut in Arbeitsrichtung 14c beschleunigt werden.

## Patentansprüche

1. Pneumatische Werkzeugvorrichtung, insbesondere für eine Handwerkzeugmaschine, mit zumindest einem bewegbar gelagerten Arbeitskörper (12a-c), der durch eine fremdgesteuerte Druckbeaufschlagung in einer Arbeitsrichtung (14a-c) beschleunigbar ist, **gekennzeichnet durch** ein Druckventil (40a-c), das dazu vorgesehen ist, zumindest einen Teil des Bewegungsablaufs des Arbeitskörpers (12a-c) zu steuern und/oder zu regeln.

2. Pneumatische Werkzeugvorrichtung nach Anspruch 1, **gekennzeichnet durch** eine Steuer- und/oder Regeleinheit (42a), die dazu vorgesehen ist, das Druckventil (40a) zu steuern und/oder zu regeln.

3. Pneumatische Werkzeugvorrichtung nach Anspruch 2, **dadurch gekennzeichnet, dass** die Steuer- und/oder Regeleinheit (42a-c) als elektrische Steuer- und/oder Regeleinheit (42a-c) ausgebildet ist.

4. Pneumatische Werkzeugvorrichtung nach einem der vorhergehenden Ansprüche, **gekennzeichnet durch** ein Schaltventil (16c), dass von einem Durchgangsventil (56c) gebildet wird.

5. Pneumatische Werkzeugvorrichtung nach einem der vorhergehenden Ansprüche, **gekennzeichnet durch** ein Federelement (30a-c), welches dazu vorgesehen ist, in zumindest einem Betriebszustand auf den Arbeitskörper (12a-c) eine Kraft (32a-c) in eine Rückholrichtung (34a-c) auszuüben.

6. Pneumatische Werkzeugvorrichtung nach einem der vorhergehenden Ansprüche, **gekennzeichnet durch** zumindest eine Entspannungsöffnung (58c), die dazu vorgesehen ist, eine Druckbeaufschlagung des Arbeitskörpers (12c) abhängig von einer Position des Arbeitskörpers (12c) zu entspannen.

7. Pneumatische Werkzeugvorrichtung nach einem der vorhergehenden Ansprüche, **gekennzeichnet durch** zumindest einen Hochdruckspeicher (44a-c) zur Bereitstellung von Hochdruck und/oder zumindest einen Niederdruckspeicher (46b) zur Aufnahme von entspanntem Medium.

8. Pneumatische Werkzeugvorrichtung nach Anspruch 7, **gekennzeichnet durch** eine am Hochdruckspeicher (44a-c) angeordnete Kompressoreinheit (48a-c).

9. Pneumatische Werkzeugvorrichtung nach einem der vorhergehenden Ansprüche, **dadurch gekennzeichnet, dass** die Werkzeugvorrichtung (10a-c) als Schlagwerkvorrichtung (52a-c) und der Arbeitskörper (12a-c) als Schläger (54a-c) ausgebildet ist.

10. Handwerkzeugmaschine einer Werkzeugvorrichtung (10a-c) nach einer der vorhergehenden Ansprüche.
